# EUROPÄISCHE PATENTANMELDUNG

(11) **EP 1 006 025 A2**
(43) Veröffentlichungstag der Anmeldung: **07.06.2000**
(21) Anmeldenummer: 99121930.4
(22) Anmeldetag: 08.11.1999
(51) Int. Cl.: B60R 21/01

(54) **Verfahren und Messeinrichtung zur Erkennung der Sitzposition eines Fahrzeuginsassens mittels einer Kamera**

(30) Priorität: 01.12.1998 DE 19855301
(71) Anmelder: Volkswagen Aktiengesellschaft, 38436 Wolfsburg (DE)
(72) Erfinder: Milch, Stefan, 38106 Braunschweig (DE)

(57) **Zusammenfassung**

Es wird ein Verfahren zur Erkennung der Sitzposition eines Fahrzeuginsassens (2) und eine Meßeinrichtung zur Durchführung des Verfahrens vorgeschlagen. Von einem Projektor (4) werden Lichtstreifen (6) im für den Menschen unsichtbaren Spektrum auf den Fahrzeuginsassen (2) abgestrahlt. Eine Kamera (5) nimmt die reflektierten Lichtstreifen (7) auf und leitet diese an eine Auswerteeinrichtung zur Bestimmung der Sitzposition des Fahrzeuginsassens (2) weiter. Die Positionsbestimmung erfolgt dabei mittels Triangulation, um sehr schnell Sitzpositionsänderungen erfassen zu können. Wird eine kritische Sitzposition festgestellt, kann ein Airbagsystem zur Vermeidung von Verletzungen des Insassens (2) entsprechend beeinflußt werden.

## Beschreibung

Die Erfindung betrifft ein Verfahren zur Erkennung der Sitzposition eines Fahrzeuginsassens gemäß Oberbegriff des Anspruchs 1 sowie eine Meßeinrichtung zur Durchführung des Verfahrens.

Es sind Verfahren zur Abstandsmessung bekannt, bei denen Lichtbündel oder Lichtebenen von einem Projektor auf ein Objekt abgestrahlt werden, deren Reflexion mittels einer Kamera aufgenommen wird. Ist der Abstand zwischen Projektor und Kamera bekannt, so kann zu jedem angestrahlten Objektpunkt die Entfernung dadurch bestimmt werden, daß der Abstrahlwinkel des projizierten Lichts und der Empfangswinkel des reflektierten Lichts ausgewertet werden. Die Position eines Objekts kann somit durch Triangulation exakt bestimmt werden.

Aus der DE 36 38 941 A1 ist ein Verfahren zur rechnergestützen dreidimensionalen Video-Körpervermessung bekannt, bei dem ein abgespeichertes Referenzraster mit dem von einer Videokamera aufgenommen Linienraster verglichen wird, um beispielsweise wirbelsäulenbedingte Veränderungen an einem menschlichen Körner feststellen zu können.

Aus der DE 197 24 496 A1 ist eine Hinderniserfassungsvorrichtung für ein Fahrzeug bekannt, bei der die Position eines Hindernisses durch Triangulation berechnet wird. Durch Bestimmung der Entfernung und der Position eines Hindernisses kann ein bevorstehender Aufprallzustand ermittelt und eine entsprechende Betätigung der Insassensicherheitsvorrichtung ausgeführt werden.

In der WO 97/11862 ist ein Sensoranordnung innerhalb eines Fahrzeugs beschrieben, mit der die Position und die Bewegung des Kopfes eines Fahrzeuginsassens ebenfalls mittels Triangulation ermittelt werden können. Dabei werden kapazitive Sensoren verwendet, die im Falle einer Abweichung von der aufrechten Sitzposition ein Warnsignal auslösen, um beispielsweise einen übermüdeten Fahrer am Einschlafen zu hindern.

Der Erfindung liegt die Aufgabe zugrunde, ein Verfahren zur Erkennung der Sitzposition eines Fahrzeuginsassens anzugeben, mit dem eine Veränderung der Insassenposition möglichst schnell festgestellt werden kann.

Die Lösung dieser Aufgabe erhält man durch die im Anspruch 1 angegebenen Merkmale. Die von einem Projektor ausgestrahlten Lichtstreifen liegen in dem für den Menschen nicht sichtbaren Spektrum, so daß dadurch die Sicht des Fahrzeuginsassens in keiner Weise beeinträchtigt wird. Der Projektor kann das Licht somit von vorne auf den Fahrzeuginsassen abstrahlen und eine ebenfalls vor dem Fahrzeuginsassen angebrachte Kamera kann die reflektierten Lichtstreifen empfangen und einer Auswerteeinrichtung zuführen. Auf diese Weise läßt sich die Position eines Fahrzeuginsassens insbesondere in Bezug auf eine vor oder neben dem Fahrzeuginsassen angeordnete Airbageinrichtung exakt feststellen. Befindet sich der Fahrzeuginsasse außerhalb eines für eine Airbaganwendung zulässigen Positionsbereichs, so kann dies durch das Verfahren festgestellt werden, um im Falle eines Aufprallunfalls das Airbagsystem entsprechend zu steuern. Befindet sich der Fahrzeuginsasse in einer extrem ungünstigen Position (out of position) so kann im Extremfall auch eine vollständige Unterdrückung der Airbagauslösung veranlaßt werden.

Besonders vorteilhaft ist es, zu jedem der aufgenommen Lichtstreifen eine Entfernungsmessung durchzuführen, wobei die Richtung und Änderungsgeschwindigkeit einer Positionsänderung jedes Lichtstreifens eine besonders schnelle Aussage über die Position des Fahrzeuginsassens ermöglicht. Die Positionsdaten der Lichtstreifen werden zu diesem Zweck zwischengespeichert, so daß in einem gewissen Zeitabschnitt die Historie der Lichtstreifenpositionen für die Auswertung berücksichtigt werden kann.

Anhand der Historie der Lichtstreifenpositionen läßt sich eine Vorhersage über Positionsänderungen machen, wodurch die exakte Ermittlung der aktuellen Insassenposition besonders schnell erfolgen kann. Dies ist im Zusammenhang mit einem Airbagsystem besonders wichtig, da in einer Unfallsituation im Millisekundenbereich entschieden werden muß, ob oder in welchem Umfang eine Beeinflussung des Airbagsystems erforderlich ist.

Anhand der Historie der Positionsänderungen der aufgenommenen Lichtstreifen läßt sich eine Aussage über die Dynamik der Veränderung der Insassenposition machen. Die daraus gewonnene Information kann nicht nur zur Beeinflussung eines Airbagsystems herangezogen werden, sondern auch zur Auslösung eines Warnsignals, um den Fahrzeuginsassen auf eine ungünstige oder gar gefährliche Sitzposition hinzuweisen.

Versuche haben gezeigt, daß die Lichtstreifen bevorzugt im Spektrum oberhalb des für den Menschen sichtbaren Lichts liegen können. Damit lassen sich störungsfreie und schnell arbeitende Meßeinrichtungen realisieren.

Der Erfindung liegt weiterhin die Aufgabe zugrunde, eine Meßeinrichtung zur Durchführung des erfindungsgemäßen Verfahrens zu schaffen.

Die Lösung dieser Aufgabe wird durch die im Anspruch 7 angegebenen Merkmale erhalten. Mit einem in Fahrtrichtung vor dem Fahrzeuginsassen angeordneten Projektor und einer Kamera läßt sich der Abstand des Fahrzeuginsassen zu einem in Fahrtrichtung vor ihm angeordneten Airbag und auch bezüglich eines Seitenairbags ermitteln. Hierzu kann in einer Auswerteeinrichtung eine Recheneinheit vorgesehen sein, die mittels Triangulation die jeweiligen Abstände und daraus die exakte Insassenposition ermittelt.

Die Auswerteeinrichtung kann mit einer Airbagsteuerung verbunden sein und in Abhängigkeit von der jeweiligen Insassenposition die Airbagsteuerung beeinflussen, wie dies bereits oben dargelegt wurde.

Bei der verwendeten Kamera kann es sich vorzugsweise um eine CCD-Kamera handeln, die als Triangulationskamera eingesetzt wird.

Die Erfindung wird nachfolgend anhand eines in der Zeichnung dargestellten Ausführungsbeispiels näher erläutert.

Es zeigen:
- Figur 1: die Anordnung eines Projektors und einer Kamera in einem Kraftfahrzeug zur Bestimmung der Sitzposition des Fahrers und
- Figur 2: ein Blockschaltbild der Meßeinrichtung zur Durchführung des erfindungsgemäßen Verfahrens.

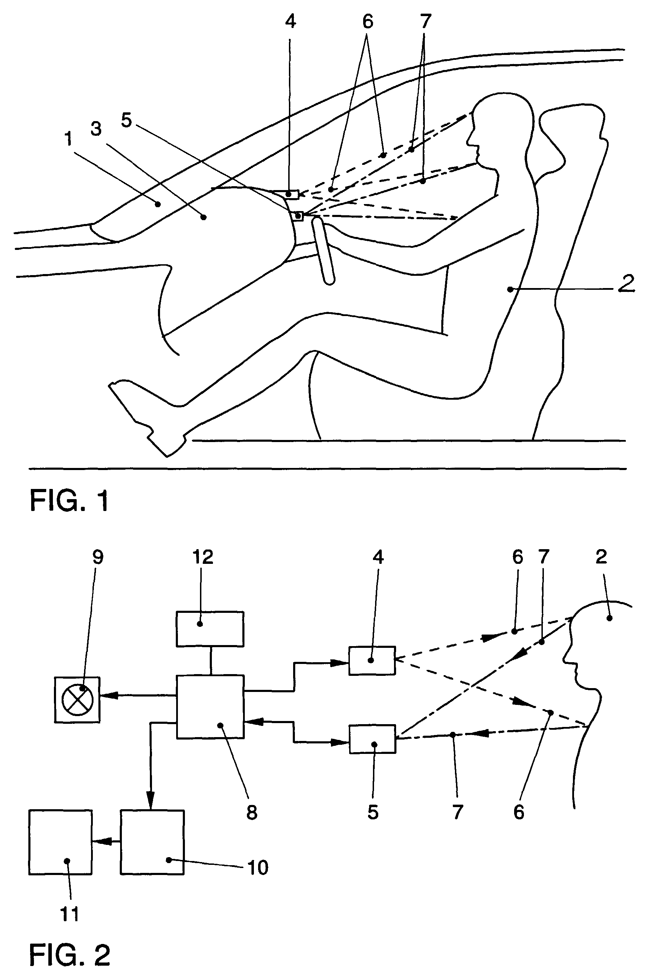

Bei dem in Figur 1 dargestellten Kraftfahrzeug 1 ist als Fahrzeuginsasse 2 der Fahrer dargestellt, vor dem sich am Armaturenbrett 3 ein Projektor 4 und eine Kamera 5 befinden. Zur Ermittlung der Sitzposition des Fahrers sendet der Projektor 4 beispielsweise waagrechte und/oder horizontale Lichtstreifen 6 aus, deren Reflexion von der Kamera 5 aufgenommen wird. Die Richtung der reflektierten und von der Kamera 5 aufgenommen Lichtstreifen 7 werden ebenso wie die Richtung der vom Projektor 4 abgestrahlten Lichtstreifen 6 zur Entfernungsmessung und zur Positionsbestimmung des Fahrzeuginsassens 2 verwendet.

Die vom Projektor 4 abgestrahlten und von der Kamera 5 aufgenommenen Lichtstreifen 6 bzw. 7 können in einer Meßeinrichtung gemäß Figur 2 zur Positionsbestimmung ausgewertet werden. Kernstück der Meßeinrichtung ist eine Recheneinheit 8, die ausgangsseitig mit einem Signalgeber 9 und einer Airbagsteuerung 10 verbunden ist. Die Airbagsteuerung 10 ist ihrerseits ausgangsseitig mit einem Airbag 11 verbunden, um diesen in einer Unfallsituation in der jeweils erforderlichen Weise auszulösen.

Weiterhin steht die Recheneinheit 8 mit dem Projektor 4, der Kamera 5 und einem Speicher 12 in Verbindung. Im Speicher 12 lassen sich die über einen gewissen Zeitraum durch Triangulation ermittelten Werte abspeichern, so daß die Recheneinheit 8 aufgrund der dadurch vorhandenen Historie der Lichtstreifen 6, 7 eine Aussage über die Dynamik und die Richtung von Positionsänderungen des Fahrzeuginsassens 2 getroffen werden können.

Im Speicher 12 können Meßwerte und rechnerisch ermittelte Werte gemeinsam abgespeichert werden, falls dies für die weitere Auswertung in der Recheneinheit 8 gewünscht wird.

### BEZUGSZEICHENLISTE

- 1: Kraftfahrzeug
- 2: Fahrzeuginsasse
- 3: Armaturenbrett
- 4: Projektor
- 5: Kamera
- 6: Lichtstreifen
- 7: Lichtstreifen
- 8: Recheneinheit
- 9: Signalgeber
- 10: Airbagsteuerung
- 11: Airbag
- 12: Speicher

## Patentansprüche

1. Verfahren zur Erkennung der Sitzposition eines Fahrzeuginsassens (2), wobei mittels Triangulation die Entfernung des Fahrzeuginsassens (2) zu einer Empfangseinrichtung oder einem anderen Bezugspunkt in einem Fahrzeug (1) bestimmt wird, **dadurch gekennzeichnet**, daß ein Projektor (4) Lichtstreifen (6), die im für den Menschen nicht sichtbaren Spektrum liegen, auf den Fahrzeuginsassen (2) projiziert, daß die am Fahrzeuginsassen (2) reflektierten Lichtstreifen (7) mit einer Kamera (5) aufgenommen werden, und daß aus der Richtungsposition der von der Kamera (5) aufgenommenen Lichtstreifen (7) in Verbindung mit den vom Projektor (4) abgestrahlten Lichtstreifen (6) die Entfernung des Fahrzeuginsassens (2) bestimmt wird.

2. Verfahren nach Anspruch 1, **dadurch gekennzeichnet**, daß zu jedem aufgenommenen Lichtstreifen (7) die Entfernung zu einem festen Bezugspunkt bestimmt wird.

3. Verfahren nach einem der Ansprüche 1 oder 2, **dadurch gekennzeichnet**, daß die Richtung und Änderungsgeschwindigkeit einer Positionsänderung jedes aufgenommenen Lichtstreifens (7) ermittelt wird.

4. Verfahren nach einem der vorhergehenden Ansprüche, **dadurch gekennzeichnet**, daß die Dynamik von Positionsänderungen der aufgenommenen Lichtstreifen (7) festgehalten und zur Feststellung der Veränderung der Insassenposition ausgewertet wird.

5. Verfahren nach Anspruch 4, **dadurch gekennzeichnet,** daß Veränderungen der Insassenposition durch Tracking der aufgenommenen Lichtstreifen (7) schnell festgestellt werden.

6. Verfahren nach einem der vorhergehenden Ansprüche, **dadurch gekennzeichnet**, daß die Lichtstreifen (6, 7) im IR-Spektrum des für den Menschen nicht sichtbaren Lichts liegen.

7. Meßeinrichtung zur Durchführung des Verfahrens nach einem der vorhergehenden Ansprüche, die eine Sende- und eine Empfangseinrichtung sowie eine Auswerteeinrichtung zur Entfernungsbestimmung umfaßt, **dadurch gekennzeichnet**, daß als Sendeeinrichtung ein Projektor (4) und als Empfangseinrichtung eine Kamera (5) in Fahrtrichtung vor dem Fahrzeuginsassen (2) angeordnet sind.

8. Meßeinrichtung nach Anspruch 7, **dadurch gekennzeichnet**, daß die Auswerteeinrichtung eine Recheneinheit (8) mit einem Speicher (12) zur Durchführung der Triangulation beinhaltet.

9. Meßeinrichtung nach einem der Ansprüche 7 oder 8, **dadurch gekennzeichnet**, daß die Auswerteeinrichtung mit einer Airbagsteuerung (10) verbunden ist und in Abhängigkeit von der jeweiligen Sitzposition des Fahrzeuginsassens (2) die Airbagsteuerung (10) beeinflußt.

10. Meßeinrichtung nach Anspruch 9, **dadurch gekennzeichnet**, daß in einem für die Airbaganordnung kritischen Sitzposition des Fahrzeuginsassens (2) eine Airbagauslösung von der Recheneinheit (8) über die Airbagsteuerung (10) unterdrückt wird.
